# EUROPEAN PATENT SPECIFICATION

(11) **EP 3 880 438 B1**
(45) Date of publication and mention of the grant of the patent: **21.08.2024**
(21) Application number: 19820930.6
(22) Date of filing: 14.11.2019
(51) Int. Cl.: B29C 64/209, B29C 64/227, B33Y 30/00, B29C 64/118

(54) **FILAMENT DRIVE MECHANISM FOR USE IN ADDITIVE MANUFACTURING SYSTEM AND METHOD OF PRINTING 3D PART**
FADENANTRIEBSMECHANISMUS ZUR VERWENDUNG IN EINEM GENERATIVEN FERTIGUNGSSYSTEM UND VERFAHREN ZUM DRUCKEN VON 3D-TEILEN
MÉCANISME D'ENTRAÎNEMENT DE FILAMENT DESTINÉ À ÊTRE UTILISÉ DANS UN SYSTÈME DE FABRICATION ADDITIVE ET PROCÉDÉ D'IMPRESSION DE PIÈCE EN 3D

(30) Priority: 14.11.2018 US 201862767294 P
(43) Date of publication of application: 22.09.2021
(60) Divisional application: 24187525.1
(73) Proprietor: Stratasys, Inc., Eden Prairie, MN 55344 (US)
(72) Inventor: PEKARNA, Matt, Eden Prairie, MN 55346 (US); KOOP, Shawn, Minneapolis, MN 55412 (US); SCHULLER, Peter, Elko, MN 55020 (US); NADEAU, Jordan, White Bear Lake, MN 55110 (US); ALVIG, David, Savage, MN 55378 (US)
(74) Representative: De Vries & Metman
(86) International application number: PCT/US2019/061524
(87) International publication number: WO 2020/102569

(56) References cited:
- EP-A1- 2 117 793
- WO-A1-01/89714
- CN-U- 207 044 697
- US-A1- 2018 027 615
- US-A1- 2018 154 586
- US-A1- 2018 304 533

## Description

### BACKGROUND

The present disclosure relates to additive manufacturing systems for printing or otherwise building 3D parts by material extrusion techniques. In particular, the present disclosure relates to filament drive mechanisms for use in extrusion-based 3D printers.

Additive manufacturing, also called 3D printing, is generally a process in which a three-dimensional (3D) object is built by adding material to form a part rather than subtracting material as in traditional machining. Using one or more additive manufacturing techniques, a three-dimensional solid object of virtually any shape can be printed from a digital model of the object by an additive manufacturing system, commonly referred to as a 3D printer. A typical additive manufacturing work flow includes slicing a three-dimensional computer model into thin cross sections defining a series of layers, translating the result into two-dimensional position data, and feeding the data to a 3D printer which manufactures a three-dimensional structure in an additive build style. Additive manufacturing entails many different approaches to the method of fabrication, including material extrusion, ink jetting, selective laser sintering, powder/binder jetting, electron-beam melting, electrophotographic imaging, and stereolithographic processes.

In a typical extrusion-based additive manufacturing system (e.g., fused deposition modeling systems developed by Stratasys, Inc., Eden Prairie, MN), a 3D object may be printed from a digital representation of the printed part by extruding a viscous, flowable thermoplastic or filled thermoplastic material from a print head along toolpaths at a controlled extrusion rate. The extruded flow of material is deposited as a sequence of roads onto a substrate, where it fuses to previously deposited material and solidifies upon a drop in temperature. The print head includes a liquefier which receives a supply of the thermoplastic material in the form of a flexible filament, and a nozzle tip for dispensing molten material. A filament drive mechanism engages the filament such as with a drive wheel and a bearing surface, or pair of toothed-wheels, and feeds the filament into the liquefier where the filament is melted. The unmelted portion of the filament essentially fills the diameter of the liquefier tube, providing a plug-flow type pumping action to extrude the molten filament material further downstream in the liquefier, from the tip to print a part, to form a continuous flow or toolpath of resin material. The extrusion rate is unthrottled and is based only on the feed rate of filament into the liquefier, and the filament is advanced at a feed rate calculated to achieve a targeted extrusion rate, such as is disclosed in Comb U.S. Patent No. 6,547,995.

In a system where the material is deposited in planar layers, the position of the print head relative to the substrate is incremented along an axis (perpendicular to the build plane) after each layer is formed, and the process is then repeated to form a printed part resembling the digital representation. In fabricating printed parts by depositing layers of a part material, supporting layers or structures are typically built underneath overhanging portions or in cavities of printed parts under construction, which are not supported by the part material itself. A support structure may be built utilizing the same deposition techniques by which the part material is deposited. A host computer generates additional geometry acting as a support structure for the overhanging or tree-space segments of the printed part being formed. Support material is then deposited pursuant to the generated geometry during the printing process. The support material adheres to the part material during fabrication, and is removable from the completed printed part when the printing process is complete.

A multi-axis additive manufacturing system may be utilized to print 3D parts using fused deposition modeling techniques. The multi-axis system may include a robotic arm movable in six degrees of freedom. The multi-axis system may also include a build platform movable in two or more degrees of freedom and independent of the movement of the robotic arm to position the 3D part being built to counteract effects of gravity based upon part geometry. An extruder may be mounted at an end of the robotic arm and may be configured to extrude material with a plurality of flow rates, wherein movement of the robotic arm and the build platform are synchronized with the flow rate of the extruded material to build the 3D part. The multiple axes of motion can utilize complex tool paths for printing 3D parts, including single continuous 3D tool paths for up to an entire part, or multiple 3D tool paths configured to build a single part. Use of 3D tool paths can reduce issues with traditional planar toolpath 3D printing, such as stair stepping (layer aliasing), seams, the requirement for supports, and the like. Without a requirement to slice a part to be built into multiple layers each printed in the same build plane, the geometry of the part may be used to determine the orientation of printing.

The document CN207044697U discloses a filament drive mechanism for use in driving an elastomeric filament in an additive manufacturing system, which mechanism is configured to engage the filamant without using teeth or cogs, such as to diminish the risk of damage to the filament.

Whichever print system architecture is used, the printing operation for fused deposition modeling is dependent on a predictable and controlled advancement of filament into the liquefier at a feed rate that will extrude material at a targeted extrusion rate. Thus, there is an ongoing need for improved reliability of filament feeding and delivering in printing 3D parts with extrusion-based additive manufacturing techniques.

### SUM MARY

The present disclosure relates to a filament drive mechanism for use with an additive manufacturing system. The filament drive mechanism includes a first filament drive mechanism having a first rotatable shaft and a second rotatable shaft engaged with the first rotatable shaft in a counter rotational configuration. Each rotatable shaft has a plurality of teeth positioned on opposing sides of a filament path with a gap therebetween so as to engage a filament provided in the filament path. The plurality of teeth has a substantially flat surface having a width ranging from about 2.032 mm (0.08 inches) to about 3.81 mm (0.15 inches) and being configured to engage a filament.

### DEFINITIONS

Unless otherwise specified, the following terms as used herein have the meanings provided below:

Directional orientations such as "above", "below", "top", "bottom", and the like are made with reference to a layer-printing direction of a 3D part. In the embodiments shown below, the layer-printing direction is the upward direction along the vertical z-axis. In these embodiments, the terms "above", "below", "top", "bottom", and the like are based on the vertical z-axis. However, in embodiments in which the layers of 3D parts are printed along a different axis, such as along a horizontal x-axis or y-axis, the terms "above", "below", "top", "bottom", and the like are relative to the given axis.

The term "providing", such as for "providing a print head", when recited in the claims, is not intended to require any particular delivery or receipt of the provided item. Rather, the term "providing" is merely used to recite items that will be referred to in subsequent elements of the claim(s), for purposes of clarity and ease of readability.

The terms "about" and "substantially" are used herein with respect to measurable values and ranges due to expected variations known to those skilled in the art (e.g., limitations and variabilities in measurements).

The term "dual drive" refers to a filament drive mechanism having a pair of counterrotating shafts, each shaft having an engagement surface comprising a plurality of filament engagement teeth configured to engage a filament, and where each shaft is configured to be directly or indirectly driven by a single power source and to have the same rate of rotation.

The term "quad drive" refers to a filament drive mechanism having two pairs of counterrotating shafts configured to engage the filament, each shaft configured to engage the filament having an engagement surface comprising a plurality of filament engagement teeth, and where each shaft configured to engage the filament is configured to be directly or indirectly driven by a single power source and to have the same rate of rotation.

The term "hex drive" refers to a filament drive mechanism having three pairs of counterrotating shafts configured to engage the filament, each shaft configured to engage the filament having an engagement surface comprising a plurality of filament engagement teeth, and where each shaft configured to engage the filament is configured to be directly or indirectly driven by a single power source and to have the same rate of rotation.

### BRIEF DESCRIPTION OF THE DRAWINGS

FIG. 1 is a front schematic view of an extrusion based additive manufacturing system, which utilizes a filament drive mechanism of the present disclosure.
FIG. 2 is a perspective view of a pair of print heads on a head carriage
FIG. 3 is a perspective view of an embodiment of a quad drive of the present disclosure.
FIG. 4 is a side view of the gears of the embodiment of the quad drive of the present disclosure.
FIG. 5 is a partially exploded perspective view of the gears of the quad drive of the present disclosure having a drive attached to a gear in a first location.
FIG. 6 is a front schematic view of the quad drive of the present disclosure having a drive gear in a first location.
FIG. 7 is a sectional view of a drive block of the quad drive wherein the filament path is illustrated having a drive gear in a first location.
FIG.8 is a front schematic view of the quad drive of the present disclosure having a drive gear in a second location.
FIG. 9 is a front schematic view of a hex drive of the present disclosure.
FIG. 10 is a sectional view of a drive block of the hex drive wherein the filament path is illustrated.
FIG. 11A is a schematic view of a dual drive of the prior art engaging a rigid filament with out-of-phase engagement teeth.
FIG. 11B is a schematic view of a dual drive of the prior art engaging an elastomeric filament with out-of-phase engagement teeth.
FIG. 12A is a schematic view of quad drive engaging an elastomeric filament
FIG. 12B is a schematic view of a hex drive engaging an elastomeric filament
FIG. 13 A is a schematic view of a quad drive engaging a rigid filament.
FIG. 13B is a schematic view of a hex drive engaging a rigid filament.
FIG. 13C is a view of a filament driven with the filament drive system of FIGS. 13 A and 13B.
FIG. 14A is a schematic view of a quad drive engaging an elastomeric filament with in-phase engagement teeth in-phase with respect to the teeth in each pair, as well as between the two pairs.
FIG. 14B is a schematic view of a hex drive engaging an elastomeric filament with in-phase engagement teeth teeth in-phase with respect to the teeth in each pair, as well as amongst the pairs.
FIG. 15A is a schematic view of a dual drive engaging an elastomeric filament with in phase flat engagement teeth.
FIG. 15B is a schematic view of a quad drive engaging an elastomeric filament with in phase flat engagement teeth on each pair of counterrotating drives.
FIG. 15C is a schematic view of a hex drive engaging an elastomeric filament with flat engagement teeth.
FIG. 16A is a schematic view of a dual drive engaging a rigid filament with sharp engagement teeth.
FIG. 16B is a schematic view of a quad drive engaging a rigid filament with sharp engagement teeth.
FIG. 16C is a schematic view of a hex drive engaging a rigid filament with sharp engagement teeth.
FIG. 17 is a schematic view of a hex drive having a ratio of 2: 1 filament engagement teeth.
FIG. 18 is an illustration of indentions on the filament using the drive in FIG. 17.

### DETAILED DESCRIPTION

The present disclosure is directed to a filament drive mechanism for use with a fused deposition modeling additive manufacturing system or 3D printer for drawing and feeding consumable feedstock materials in filament form. The filament drive mechanism is typically a subcomponent of a print head or extruder that heats the filament to a molten state in a liquefier and extrudes the molten material through a nozzle or liquefier tip to print 3D parts. The filament drive mechanism of the present disclosure includes improved points of engagement with a filament in the filament path. In some embodiments, multiple drives are positioned in series along a filament path, thereby providing an extended length and additional points of engagement with a filament in the filament path. When using multiple drives in series, each drive in the series is configured to rotate at a substantially identical rate as controlled by a system controller to advance the filament to the liquefier.

The filament drive mechanisms of the present disclosure can be used to advantage with filament formed of any of a variety of materials, but is particularly suitable for use in feedings filament materials that require greater pull force (such as from a large spool or heavy spool) or that are otherwise challenging to feed using typical filament drive mechanisms of the prior art, such as hard or soft filaments. The filament drive mechanisms having additional points of engagement and/or extended-length have been found to offer particular advantage for feeding filament that is more flexible or more rigid as compared to traditional thermoplastic 3D printing filaments, for example, softer filaments formed of low durometer materials or harder filaments containing bound particles or fibers.

Low durometer materials include, but are not limited to, elastomeric materials, polyurethanes, polyesters, polyethylene block amides, silicone, rubber and vulcanates. Modeling filaments may be formed, for example, from one or more of the following low durometer materials: silicone, rubber, and/or thermoplastic polyurethane. For instance, the filament material may be formed from a material having a durometer of less than about 95 on the Shore A scale. Additionally, the filament material may be a mixture of polymeric materials, and may be substantially formed of thermoplastic elastomers, such as polyurethane. Such low durometer materials tend to have tacky surfaces so that the materials have a generally high coefficient of friction relative to typical materials used for fused deposition modeling 3D printing, such as ABS, PC, and PLA. The elasticity, reduced stiffness and tackiness of the low durometer materials has been found to cause feed-rate errors, jams, and inaccurate extrusion rates in the print heads of the prior art, as the low durometer filament tends to stretch, slip, kink, tear, crumble and/or jam in the prior art filament drive mechanisms. These errors and inaccuracies result in poor part quality and/or failures in printing the 3D part.

A bound particle filament may be formed of metal, ceramic, mineral, glass bubbles, glass spheres or combinations and mixtures of such particulates in a polymeric matrix. Bound particle filaments are described, for example, in Heikkila U.S. Patent No. 9,512,544. As described therein, an exemplary bound filament is comprised of about 1-70 wt. % of a thermoplastic polymer; and about 30-99 wt. % of a particulate dispersed in the polymer, the particulate having a particle size of less than 500 microns, and being configured to achieve a dense packing of particle distribution. Other types of particulate filaments include composite filaments such as are described in Priedeman U.S. Patent No. 7,910,041. As described therein, nanofibers are added to a carrier material to manipulate the properties of the filament. A bound particle filament is more rigid than a typical fused deposition modeling filament, and has been demonstrated to slip against the drive wheels used to feed softer filaments.

In some embodiments, the filament drive mechanism of the present disclosure includes a plurality of drives, each drive providing a pair of counter-rotating drive wheels, thereby increasing the number of engagement teeth that penetrate and engage the filament at one time, and increasing the drive force imparted on the filament. The increased drive force and extended length of the filament drive aid in feeding filament from a feedstock supply or source and driving the filament into a liquefier at a targeted feed rate. The increased drive force is sufficient to overcome frictional forces of the feedstock supply and/or between the feedstock source and the liquefier tube while avoiding or minimizing slippage, stretching and kinking. In some embodiments, the radius, diameter or circumference of the drives, the number of teeth on each drive and the distance between the drives are taken into account so that teeth of successive drives engage previously created notches in the filament by prior pairs of counter-rotating drive wheels. Utilizing the same notches in the filament when printing with softer materials reduces debris build up in the print head and thereby increases print head reliability. Utilization of notches can be used to advantage in driving other materials as well, for example, reducing wear on the filament drive.

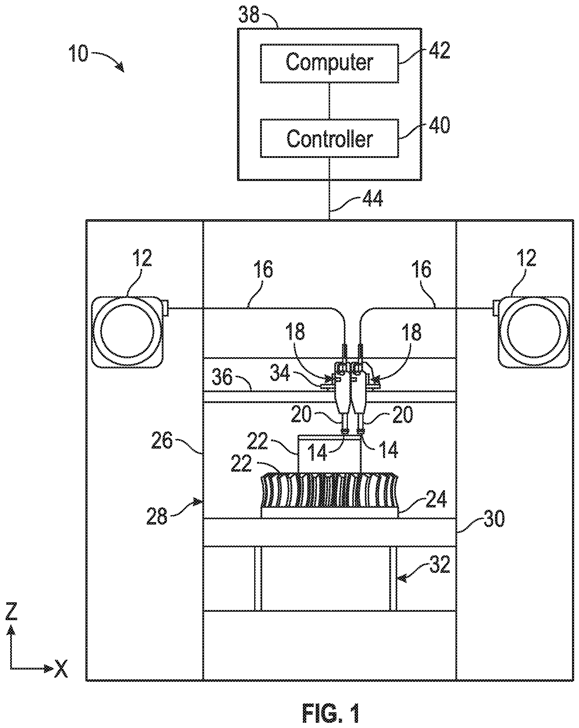

The present disclosure may be used with any suitable extrusion-based 3D printer. For example, FIG. 1 illustrates an exemplary 3D printer 10 that has a substantially horizontal print plane where the part being printed and indexed in a substantially vertical direction as the part is printed in a layer by layer manner using two print heads 18. The illustrated 3D printer 10 uses two consumable assemblies 12, where each consumable assembly 12 is an easily loadable, removable, and replaceable container device that retains a supply of a consumable filament for printing with system 10. Typically, one of the consumable assemblies 12 contains a part material filament, and the other consumable assembly 12 contains a support material filament, each supplying filament to one print head 18. However, both consumable assemblies 12 may be identical in structure. Each consumable assembly 12 may retain the consumable filament on a wound spool, a spool-less coil, or other supply arrangement, such as discussed for example in Turley et al. U.S. Patent No. 7,063,285; Taatjes at al., U.S. Patent No. 7,938,356; and Mannella et al., U.S. Patent Nos. 8,985,497 and 9,073,263.

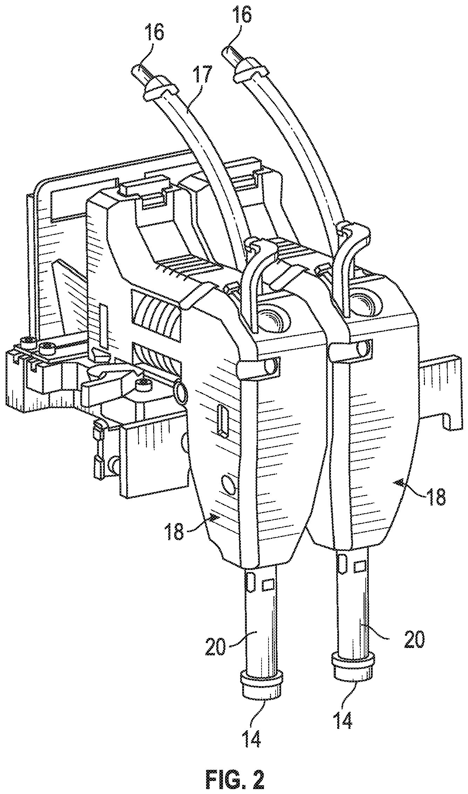

As shown in Fig 2, each print head 18 is a device comprising a housing that retains a liquefier 20 having a nozzle tip 14. A guide tube 16 interconnects each consumable assembly 12 and print head 18, and provides a filament path from the filament supply to the print head. Guide tube 16 may be a component of system 10, where in the shown embodiment, the print head 18 includes an end piece 17 that attaches the guide tube 16 at one end and engages the print head 18 at another end. In the shown embodiment, the end piece 17 is sufficiently rigid to retain an arcuate configuration having a radius that prevents the filament from bending too sharply which can cause the filament to break or create a crease in the filament that can result in the filament being misfed to the print head. In other embodiments, guide tube 16 is a sub- component of the consumable assembly and/or of the print head, and may be interchanged to and from system 10 with each consumable assembly and/or print head. A guide tube typically has a length that is minimized to reduce the frictional forces between the filament and an inner surface of the guide tube. The number and extent of bends in the guide tube typically are also minimized to minimize a contact area between the inner surface of the guide tube and the filament. However, frictional forces between the filament and the guide tube cannot be eliminated, and in some printer architectures and using some material types cannot be sufficiently resolved to allow an adequate pull force on the filament, or to avoid slippage, spin out, and loss of extrusion issues at the print head.

Exemplary 3D printer 10 prints parts or models and corresponding support structures (e.g., 3D part 22 and support structure 24) from the part and support material filaments, respectively, of consumable assemblies 12, by extruding roads of molten material along toolpaths. During a build operation, successive segments of consumable filament are driven into print head 18 where they are heated and melt in liquefier 20. The melted material is extruded through nozzle tip 14 in a layer-wise pattern to produce printed parts. Suitable 3D printers 10 include fused deposition modeling systems developed by Stratasys, Inc., Eden Prairie, MN under the trademark "FDM".

As shown, the 3D printer 10 includes system cabinet or frame 26, chamber 28, platen 30, platen gantry 32, head carriage 34, and head gantry 36. Cabinet 26 may include container bays configured to receive consumable assemblies 12. In alternative embodiments, the container bays may be omitted to reduce the overall footprint of 3D printer 10. In these embodiments, consumable assembly 12 may stand proximate to printer 10.

Chamber 28 contains platen 30 for printing 3D part 22 and support structure 24. Chamber 28 may be an enclosed environment and may be heated (e.g., with circulating heated air) to reduce the rate at which the part and support materials solidify after being extruded and deposited (e.g., to reduce distortions and curling). In alternative embodiments, chamber 28 may be omitted and/or replaced with different types of build environments. For example, 3D part 22 and support structure 24 may be built in a build environment that is open to ambient conditions or may be enclosed with alternative structures (e.g., flexible curtains).

Platen 30 is a platform on which 3D part 22 and support structure 24 are printed in a layer-by-layer manner, and is supported by platen gantry 32. In some embodiments, platen 30 may engage and support a build substrate, which may be a tray substrate as disclosed in Dunn et al., U.S. Patent No. 7,127,309, fabricated from plastic, corrugated cardboard, or other suitable material, and may also include a flexible polymeric film or liner, painter' s tape, polyimide tape, or other disposable fabrication for adhering deposited material onto the platen 30 or onto the build substrate. Platen gantry 32 is a gantry assembly configured to move platen 30 along (or substantially along) the vertical z-axis.

Head carriage 34 is a unit configured to receive and retain print heads 18, and is supported by head gantry 36. In the shown embodiment, head gantry 36 is a mechanism configured to move head carriage 34 (and the retained print heads 18) in (or substantially in) a horizontal x-y plane above platen 30. Examples of suitable gantry assemblies for head gantry 36 include those disclosed in Swanson et al., U.S. Patent No. 6,722,872; and Comb et al., U.S. Patent No. 9,108,360, where head gantry 36 may also support deformable baffles (not shown) that define a ceiling for chamber 28. Head gantry 36 may utilize any suitable bridge-type gantry or robotic mechanism for moving head carriage 34 (and the retained print heads 18), such as with one or more motors (e.g., stepper motors and encoded DC motors), gears, pulleys, belts, screws, robotic arms, and the like.

In an alternative embodiment, platen 30 may be configured to move in the horizontal x-y plane within chamber 28, and head carriage 34 (and print heads 18) may be configured to move along the z-axis. Other similar arrangements may also be used such that one or both of platen 30 and print heads 18 are moveable relative to each other. Platen 30 and head carriage 34 (and print heads 18) may also be oriented along different axes. For example, platen 30 may be oriented vertically and print heads 18 may print 3D part 22 and support structure 24 along the x-axis or the y-axis.

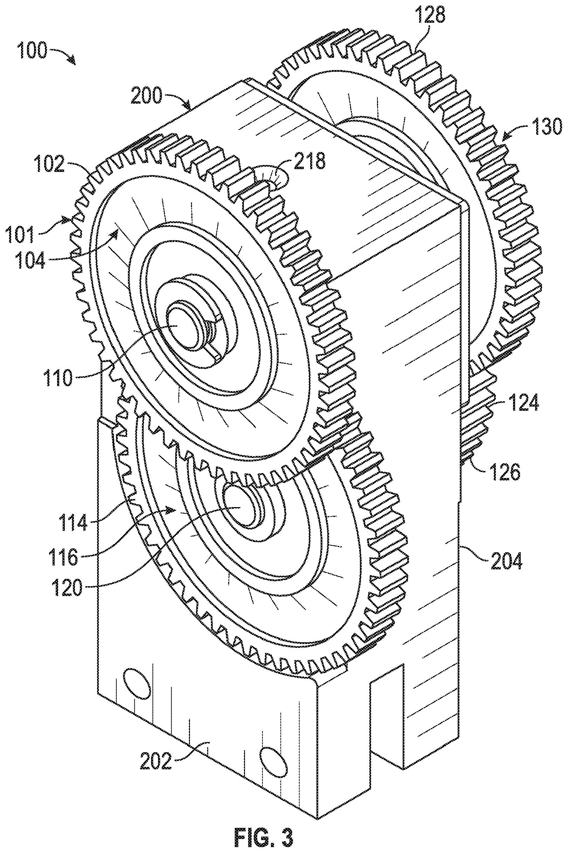

FIG. 2 illustrates an example embodiment of two print heads 18 which include a filament drive mechanism of the present disclosure. The shown print heads 18 are similarly configured to receive a consumable filament, melt the filament in liquefier 20 to product a molten material, and deposit the molten material from a nozzle tip 14 of liquefier 20. A motor (not shown) is configured to receive power from printer 10 via electrical connections for rotating a threaded-surface gear of motor. The rotating gear of motor (not shown) engages a filament drive mechanism of the present invention (such as filament drive mechanism 100, illustrated in FIG. 3) to convey rotational power. Motor (not shown) may be encased within print head 18 or may be a component of printer 10. Examples of suitable liquefier assemblies for print head 18 include those disclosed in Swanson et al., U.S. Pat. No. 6,004, 124; and Batchelder et al., U.S. Pat. No. 8,439,665. In additional embodiments, in which print head 18 is an interchangeable, single-nozzle print head, examples of suitable devices for each print head 18, and the connections between print head 18 and head gantry include those disclosed in Swanson et al., U.S. Patent Nos. 8,419,996, 8,647,102; and Barclay et al., U.S. Patent Application No. US20180043627.

3D printer 10 also includes controller assembly 38, which may include one or more control circuits (e.g., controller 40) and/or one or more host computers (e.g., computer 42) configured to monitor and operate the components of 3D printer 10. For example, one or more of the control functions performed by controller assembly 38, such as performing move compiler functions, can be implemented in hardware, software, firmware, and the like, or a combination thereof; and may include computer-based hardware, such as data storage devices, processors, memory modules, and the like, which may be external and/or internal to system 10.

Controller assembly 38 may communicate over communication line 44 with print heads 18, filament drive mechanisms 100, chamber 28 (e.g., with a heating unit for chamber 28), head carriage 34, motors for platen gantry 32 and head gantry 36, and various sensors, calibration devices, display devices, and/or user input devices. In some embodiments, controller assembly 38 may also communicate with one or more of platen 30, platen gantry 32, head gantry 36, and any other suitable component of 3D printer 10. While illustrated as a single signal line, communication line 44 may include one or more electrical, optical, and/or wireless signal lines, which may be external and/or internal to 3D printer 10, allowing controller assembly 38 to communicate with various components of 3D printer 10.

During operation, controller assembly 38 may direct platen gantry 32 to move platen 30 to a predetermined height within chamber 28. Controller assembly 38 may then direct head gantry 36 to move head carriage 34 (and the retained print heads 18) around in the horizontal x-y plane above chamber 28. Controller assembly 38 may also direct print heads 18 to selectively advance successive segments of the consumable filaments from consumable assembly 12 through guide tubes 16 and into the liquefier 20.

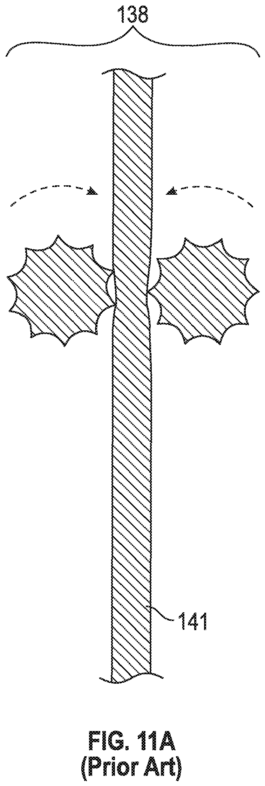

In the prior art of Koop et al., U.S. Patent No 9,321,609, commonly owned by the same applicant herein, a filament drive mechanism is disclosed that feeds a traditional consumable filament into a liquefier system. The filament drive mechanism described in Koop utilizes a single pair of counter-rotating drive wheels, or dual drive, driven by engagement with one another, such as is illustrated in FIG. 11A as drive 138. In a preferred embodiment, individual filament engaging teeth are interlaced or out of phase such that the filament is engaged with at least three teeth for at least 90% of the time while driving filament 141. The thermoplastic resin filament physical properties in Koop are described as flexible along its length to allow it to be fed through the system without plastically deforming or fracturing and desirably exhibiting low compressibility such that it does not seize within a liquefier. Filaments such as PLA, ABS, and PC are typical examples. For a filament of this type, a high level of frictional force can be applied to the filament surface at each contact point, and the drive teeth can penetrate or indent the filament, while the filament remains intact and straight in the filament path so as to advance to the liquefier without slippage or kinks.

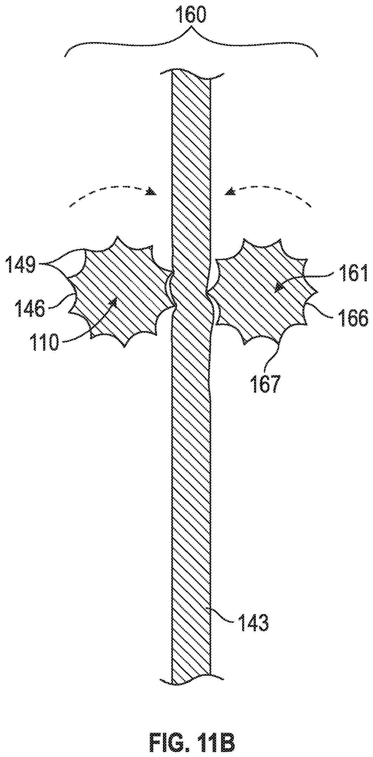

When using the single drive filament drive mechanism of Koop et al., with filament types with softer, more deformable or elastomeric properties such as polyurethanes, polyesters, polyethylene block amides, and vulcanates, experimental results show that the deformable filament tends to conform within the teeth of the drive wheel pairs, such as is illustrated in FIG. 11B, causing jamming of the drive filament drive mechanism, break-down of the filament, tearing, buckling or otherwise impeding advancement of the soft filament at the targeted rate. Likewise, the filament drive mechanism of Koop et al. has been demonstrated to stall, jam, or "spin out" (i.e., the filament stays in place while the drive wheels rotate) when feeding a rigid bound particle filament into a liquefier, as such materials tend to resist deformation or indentations from the drive teeth and slip against the filament drive wheels. In the filament drive mechanisms of the present disclosure, the amount of frictional force applied to the surface of the filament is improved such that it may feed a wide variety of filaments into a liquefier and overcome frictional forces, versus spinning out, stalling or jamming.

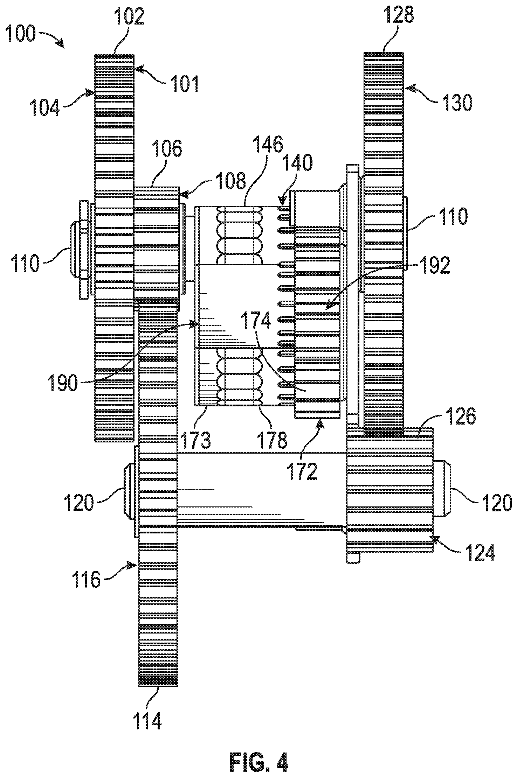

Referring to FIGS. 3 and 4, an embodiment of a quad filament drive mechanism within the exemplary print head 18 of the present disclosure is illustrated at 100. Filament drive mechanism 100 is a component of print head 18 (or of 3D printer 10) and is configured to feed successive segments of the consumable filament to liquefier 20 of print head 18 with higher reliability and greater force than filament drive mechanisms of the prior art. The filament drive mechanism 100 includes a plurality of in-line drives, each configured to rotate at a substantially identical rate and each powered by the same drive train and motor.

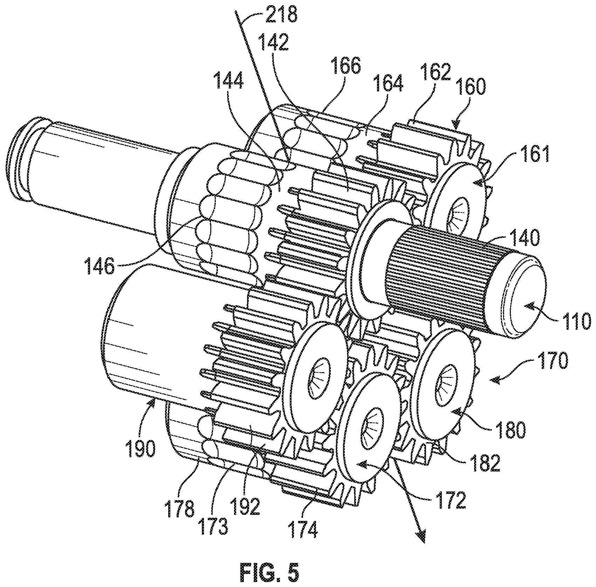

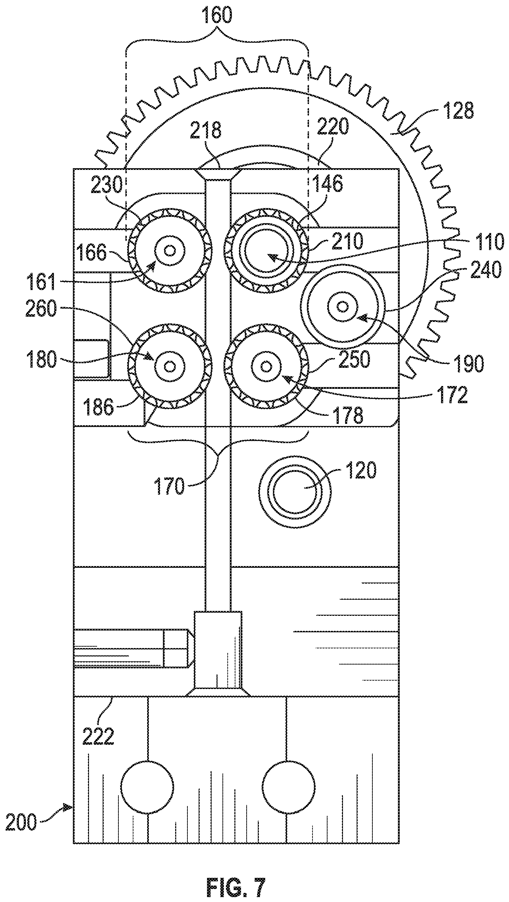

The quad drive 100 includes a drive block 200, a filament path 218 defined by drive block 200, a gear assembly 101 comprising outer gear portion 104 and inner gear portion 108, plurality of toothed gears 116, 124 and 130, a drive shaft 110, a transmission shaft 120 (such plurality of gears and shafts retained by drive block 200 and together forming a gear train), and two filament drives 160 and 170 (best shown in FIGS. 5 - 7) interconnected by a bridge shaft 190. Gear assembly 101 is rotatably secured to drive shaft 110, gears 116 and 124 are non-rotatably secured to transmission shaft 120, and gear 130 is non-rotatably secured to a spline 140 of drive shaft 110. Gear assembly 101 and gear 116 are located proximate a first side 202 of a drive block 200, while gear 124 and gear 130 are located proximate a second side 204 of the drive block 200. The gear train transfers power from motor (not shown) in the print head to the filament drives 160 and 170 to advance the filament into liquefier 20.

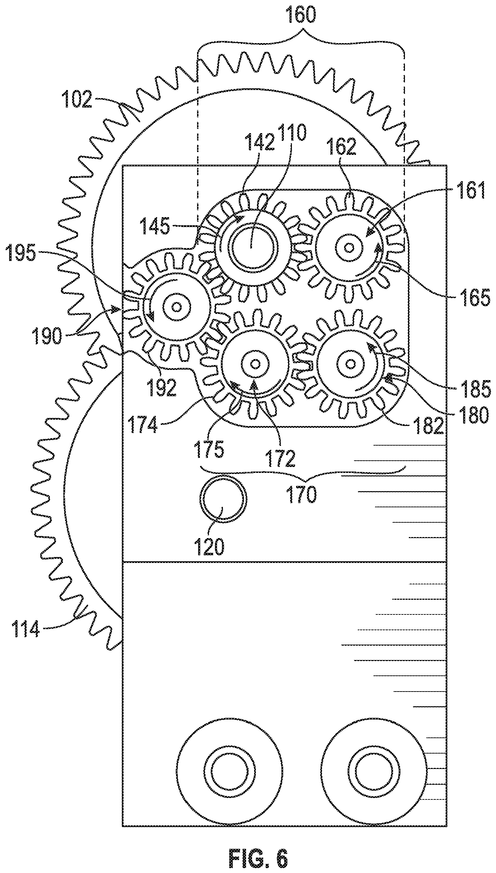

When referenced in FIG. 6, outer gear portion 104 of gear assembly 101 has circumferential cogs 102 that engage with a drive gear of motor (not shown) to rotate gear assembly 101 in a clockwise direction around drive shaft 110, wherein cogs 106 on inner gear portion 108 engage cogs 114 of gear 116, positioned just below gear 108. Gear 116 then rotates transmission shaft 120 in a counter-clockwise direction, which in turn rotates gear 124 counter clockwise. Cogs 126 of gear 124 engage cogs 128 on gear 130, which produces a clock-wise rotation of drive shaft 110. In this manner, the transmission shaft 120 transfers power across the drive block 200 from the first side 202 to the second side 204.

While a gear train drive system is illustrated to provide power to the drive shaft 140 in a manner that reduces the speed of rotation from the motor to the output shaft thereby providing mechanical advantage versus powering the drive directly from the motor, the present disclosure can utilize any suitable drive train to provide power from the motor (not shown) to the drive shaft 110 including, but not limited to, directly coupling the motor to the drive shaft 110 and using belt couplings.

Referring to FIGS. 5-7, the quad drive 100 includes two pairs of spaced apart filament engaging drives 160 and 170 that are similarly constructed and the bridge shaft 190, where the filament engaging drives 160 and 170 and the bridge shaft 190 are powered by the drive shaft 110. The filament drive 160 comprises drive shaft 110 and a follower drive 161. Drive shaft 110 includes a gear 142 and filament engagement portions (e.g., teeth) 146, separated by a substantially smooth bearing surface 144. The follower drive 161 similarly includes a gear 162 and filament engagement portions (e.g., teeth 166), separated by a substantially smooth bearing surface 164. The drive shaft 110 is positioned within a complimentary cavity 210 in the drive block 200 where the cavity 210 is configured to engage the bearing surface 144 of the drive shaft 110. The follower drive 161 is positioned within a complimentary cavity 230 in the drive block 200, where the cavity 230 is positioned on an opposing side of the filament passage 218 and is a mirror image to that of the cavity 210. Cavity 230 is configured to engage the bearing surface 164 of the follower drive 161. Gear 162 engages with gear 142, such that as gear 142 is driven in a rotational direction indicated by arrow 145, gear 162 rotates in an opposite rotational direction as indicated by arrow 165. The engagement of the bearing surfaces 144, 164 with the drive block cavities 210, 230 maintains proper alignment of the gears and the filament engagement surfaces such that the drive shaft 110 and follower drive 161 rotate about parallel rotational axes.

The filament engaging drive 170 comprises follower shafts 172 and 180, having the same configuration as that of the follower shaft 161. Shaft 172 includes a gear 174 that engages with a gear 182 on shaft 180, such that the driven shaft 180 moves in an opposite rotational direction to that of the driven shaft 172, as indicated by arrow 185. Shaft 172 is positioned within a cavity 250, and includes a bearing surface and a filament engagement portion 178 having teeth that enter the filament path 218. Shaft 172 rotates in the same rotational direction as that of the drive shaft 110 as indicted by arrow 175. Shaft 180 is positioned within a cavity 260, and includes a bearing surface and a filament engaging portion 186 having teeth that enter the filament path 218.

The bridge shaft 190 includes a gear 192 having cogs that intermesh with the cogs on gear 142 of the drive shaft 110, resulting in rotation in the direction of the arrow 195 that is opposite the rotation of the drive shaft 110 indicted by the arrow 145. The bridge shaft 190 transfers power from the drive shaft 110 to the second drive 170 through the intermeshing of the cogs of gear 192 with the cogs on gear 174 of the driven shaft 172, such that the driven shaft 172 rotates in the direction of the arrow 175, which is the same rotational direction as that of the drive shaft 110.

The cavities 210, 230, 250 and 260 intersect the filament passage 218 that extends from a top edge 220 to proximate a bottom edge 222 of the drive block 200, such that the filament teeth can engage and impart a force on the filament to pull the filament from the material source and drive the filament into a liquefier for extrusion to build the 3D part and/or support structure. In the exemplary filament drive mechanism 100, the bridge shaft 190 is positioned within a cavity 240 similar to that of the cavities 210 and 230. However, the cavity 240 is spaced from the filament passage 218 such that the bridge shaft 190 does not engage the filament.

The counter rotation of the drive shaft 110 and the follower drive 161 in the direction of arrows 145 and 165 results in filament engagement teeth 146 and 166 rotating into the filament passage 218. Cogs on gear 192 of the bridge shaft 190 engage cogs on a gear 174 on a driven shaft 172 of the second filament engaging drive 170, which in turn drives the follower shaft 180. The movement of the counter rotating shafts 172 and 180 cause teeth 179 and 186, respectively, to engage and penetrate into the filament and to drive the filament into the liquefier.

In operation, the quad drive 100 utilizes the first and second filament drives 160 and 170 which are synchronized to engage the filament to pull the filament from the source and drive the filament into the liquefier at the same rate. Because power is supplied to the drive shaft 110 by the plurality of external gears, the filament drive mechanisms 160 and 170 are rotatably moved at the same rate.

The drive shaft 110 rotates in the rotational direction of arrow 145 which causes counter rotation of the follower drive 161 in the rotational direction of arrow 165 due to the intermeshing of gears 142 and 162. The counter rotation of the drive shaft 110 and the follower drive 161 of the first drive 160 causes teeth in the filament engaging portions 146 and 166 to engage and penetrate opposing sides of the filament and force the filament through the drive block 200.

The filament drives may be configured out-of-phase, with drive wheel teeth interlaced with one another such as is disclosed in the Koop'609 patent, or alternatively may be configured in-phase, with opposing teeth engaging the filament in unison, or may be configured otherwise, all are within the scope of the present disclosure.

A single drive force on the drive shaft 110 is utilized to provide power to both drives 160 and 170. As only one drive force is utilized, the drives 160 and 170 are synchronized and do not interfering with each other when pulling the filament from the source 22 and though the guide tube 26, as illustrated in FIG. 1. If the drives 160 and 170 were not synchronized, the filament could be subjected to buckling or stretching therebetween.

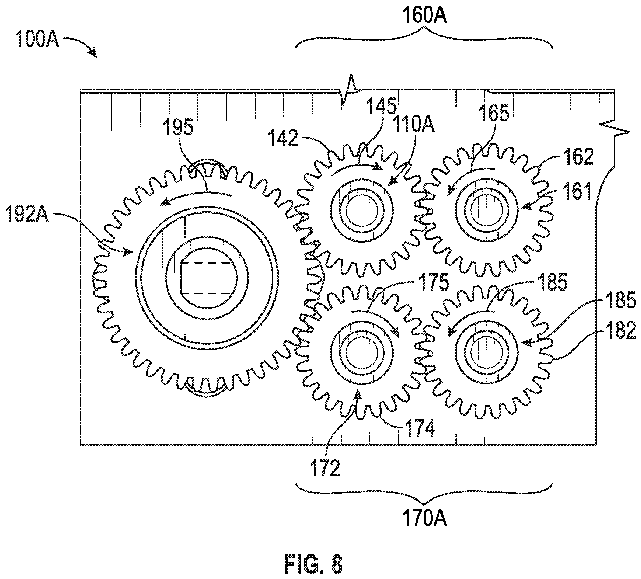

Referring to FIG. 8, an alternative version of the quad drive 100 is illustrated at 100A, where common features with the drive 100 are designated with the same number followed by "A" in the embodiment 100A. If features in the filament drive 100A are not described herein, the features are the same as described in the embodiment 100.

The quad drive 100A includes spaced apart counter-rotating drives 160A and 170A. However, the bridge shaft 192A is the driven shaft that drives the counter-rotating drives 160A and 170A. The bridge shaft 192A engages the shafts 110A and 172 at mirror image angular positions such that the bridge shaft 192A simultaneously supplies equal power to both drive 160A and 170A, which assists in maintaining synchronicity of the drives 160A and 170A. Additionally, the driven bridge shaft 192A has a gear a larger diameter than the drive gear 142 in the filament drive 100, which increases the torque applied to the drive 160A and 170A relative to the torque applied by the driven shaft 140 in the embodiment 100. The increased torque increases the power inputted into the filament, which aids in reliably driving the filament into the liquefier tube.

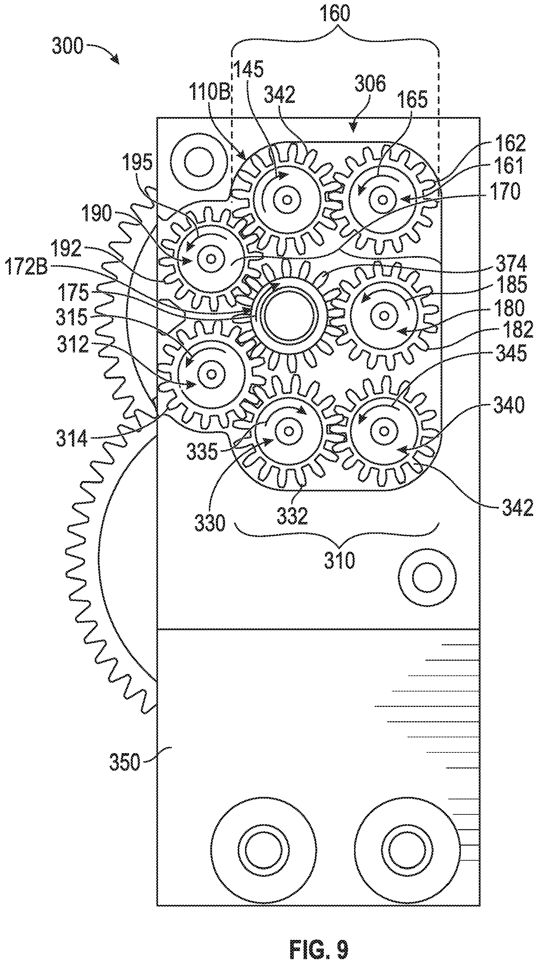

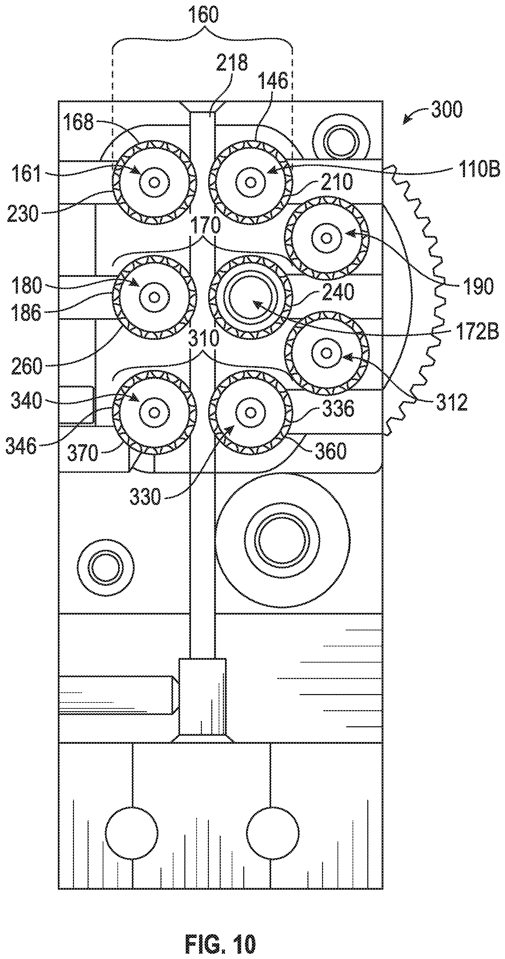

Referring to FIGS. 9 and 10, a hex drive, filament drive mechanism is illustrated at 300. Common features with the drive 100 are designated with the same number followed by "B" in the embodiment 300. If features in the hex drive 300 are not described herein, the features are the same as described in the embodiment 100.

The hex drive 300 is similar to that of the quad drive 100 in the upper five shafts are the same such that the filament drive mechanism 300 includes the drives 160 and 170, but also includes a third drive 310. However, a location of the drive shaft is moved from shaft 110 to drive shaft 172B, and shaft 110B is a follower shaft in the embodiment 300, in order to centrally locate the power source and provide equal power to each of the drives.

The drive shaft 172B provides power to the third drive 310 through a second bridge shaft 312 that has a gear 314 that intermeshes with gear 374 of the drive shaft 172B and results in rotation in the direction of the arrow 315 that is opposite the rotation of the drive shaft 172B indicted by the arrow 175 and the same rotational direction as the first bridge shaft 190. The second bridge shaft 312 transfers power to the third drive 310 which has the same configuration as that of the second drive 170.

Gear 314 of the second bridge shaft 312 engages gear 332 on a driven shaft 330 of the filament engaging drive 310. The driven shaft 330 is positioned in a cavity 360 in the drive block 350 spaced from the cavity 210 and having the same configuration as cavity 210. The driven shaft 330 is structurally the same as that of the first driven shaft 340 and includes the gear 332, the bearing surface, and the filament engaging portion 336 that has teeth that enter the filament path 218. The driven shaft 330 rotates in the same rotational direction as that of the drive shaft 372 as indicted by arrow 335.

The third filament engaging drive 310 includes a driven shaft 340 having the same configuration as that of the driven shaft 330 and the follower shaft 161. The driven shaft 340 has cogs on a gear 342 that engage the cogs on gear 314, such that the driven shaft 340 moves in an opposite rotational direction to that of the driven shaft 330, as indicated by arrow 345. The driven shaft 340 is positioned within a cavity 370 having the same configuration as that of the cavity 360 and is spaced from the cavity 360. The driven shaft 340 includes a bearing surface and a filament engaging portion 346 having teeth that enter the filament path 218.

As such, the drive 300 includes three sets of spaced apart drives 160, 170 and 310, which increase the number of contact points with the filament to increase the drive force for some materials. The number of drives can be increase by adding additional bridging shafts and pairs of shafts that engage opposing sides of the filament.

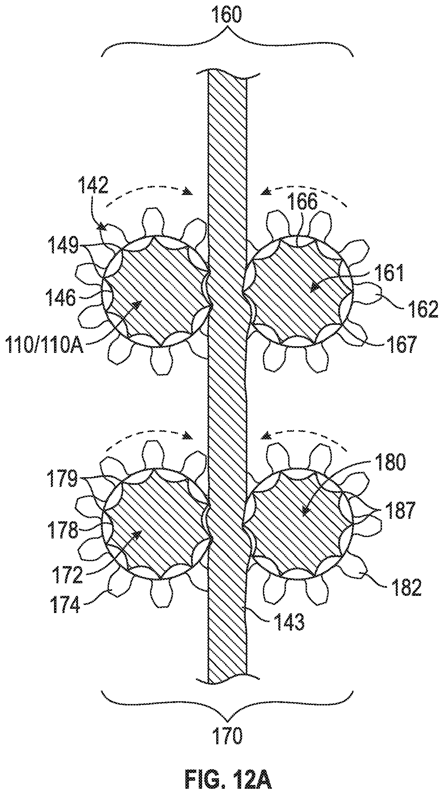

Referring to FIG. 12A, a quad drive of the present disclosure is shown having out- of-phase filament engagement teeth and illustrating the engagement of a low durometer filament 143 with the filament drive mechanism 100. The filament 143 conforms to a path between teeth 149 and 167 of filament engaging portions 146 and 166 of the drive 160. The filament 143 also conforms to a path between the filament teeth 179 and 187. An increase in the number of teeth engaging the filament 143 as compared to a single drive embodiment increases the traction and force engaging the filament 143. However, the low durometer material continues a tendency to stretch, bend and move away from the engagement surface.

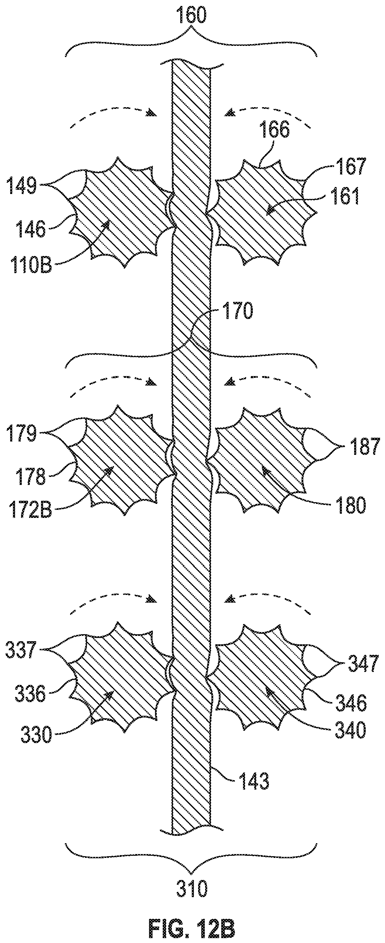

Referring to FIG. 12B, a hex drive of the present disclosure is illustrated having filament drives 160, 170 and 310. The drives 160, 170 and 310 is shown having out-of-phase filament engagement teeth and illustrating the engagement of a low durometer filament 143 that conforms to the path between the teeth of the drives 160, 170, 310.

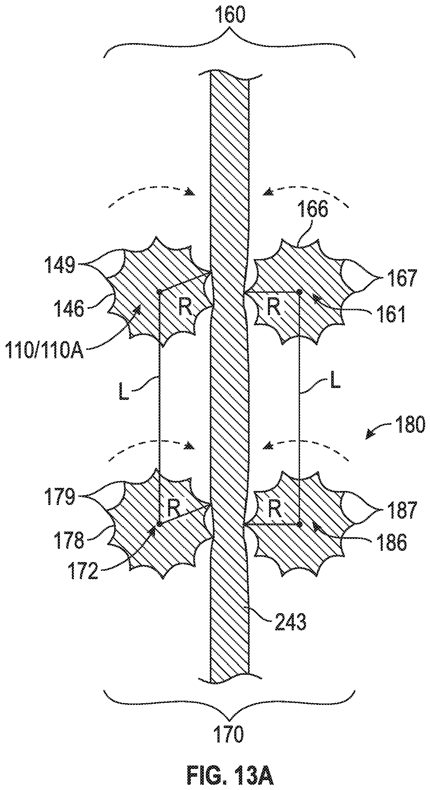

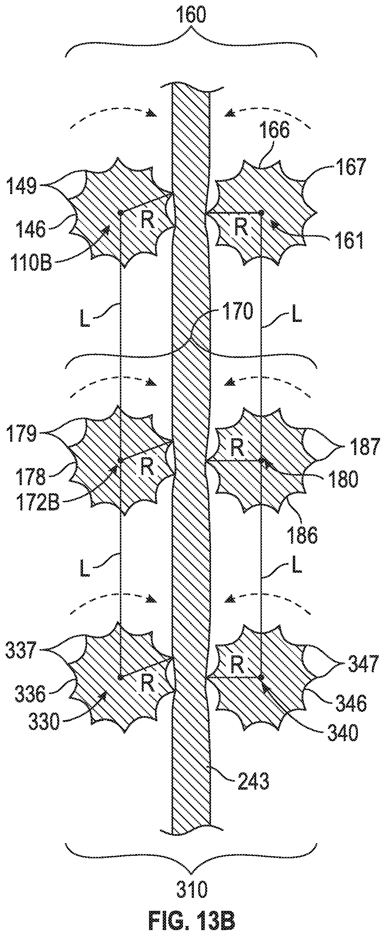

Referring to FIGS. 13A and 13B, when a substantially rigid filament 243 is engaged by teeth of the drives 160 and 170 of a quad drive (FIG. 13A) or the teeth of the drives 160, 170 and 310 of a hex drive(FIG. 13B), the filament 243 remains substantially straight. FIGS. 12A, 12B, when compared to FIGS. 13A and 13B illustrates the different effect the same filament drives can have on filaments of different hardness or durometers.

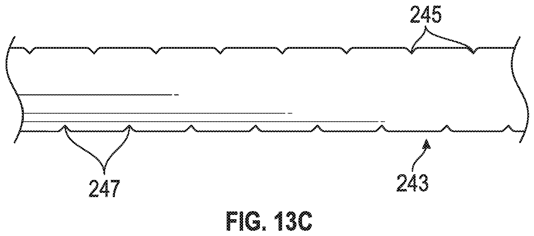

The filament 243 driven through the two-drive mechanism 160 and 170 and the three-drive mechanism 160, 170 and 310 is illustrated in FIG. 13C. The filament 243 includes out of phase indentions 245 and 247 as a result of the out of phase configuration of the two-drive mechanism 160 and 170 and the three-drive mechanism 160, 170 and 310. The radius R, length L between centerpoints of successive shaft and number of teeth per shaft are taken into consideration such that such that drives engage the same cutouts or notches created by the upper drive 160 and the upper and middle drives 160 and 170 for the triple drive system. The alignment of the drives prevents excessive debris build up and increases the reliability of the print head.

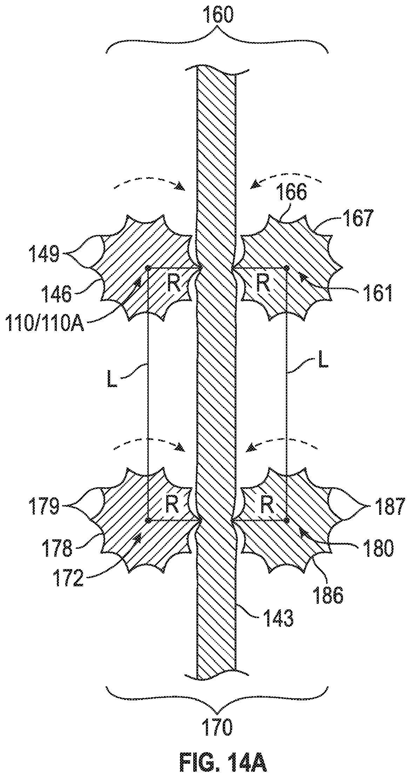

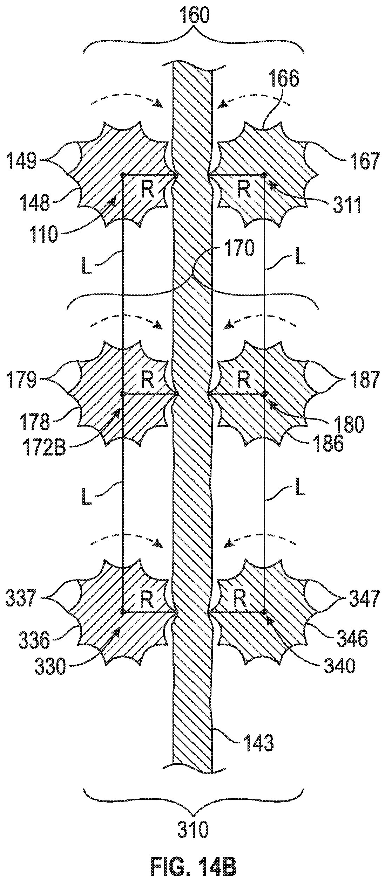

FIGS. 14A and 14B illustrate a lower durometer filament 143 being driven by the same drives as illustrated in FIGS. 12A and 12B. However, the teeth are in phase in FIGS. 14A and 14B relative to the out of phase teeth illustrated in FIGS. 12A and 12B. As illustrated in FIGS. 14A and 14B, the in phase teeth cause the low durometer filament 143 to deform or to penetrate the filament 143 when engaged, but maintain a substantially straight configuration, which can be beneficial in increasing the efficiency in driving lower durometer filaments into a liquefier tube for extrusion. The radius R, length L between centerpoints of successive shaft and number of teeth per shaft are taken into consideration such that such that drives engage the same cutouts or notches created by the upper drive 160 and the upper and middle drives 160 and 170 for the triple drive system. The alignment of the drives prevents excessive debris build up and increases the reliability of the print head.

Depending upon the type of feedstock material used the build the 3D part and/or support structure, the configuration of the filament engaging portions be varied. When printing with soft, flexible material such as elastomers having a Shore A hardness below 95, or more preferably between about 85 and about 95, the filament engaging portion can utilize fewer teeth with substantially flat surfaces flat surfaces and larger depths.

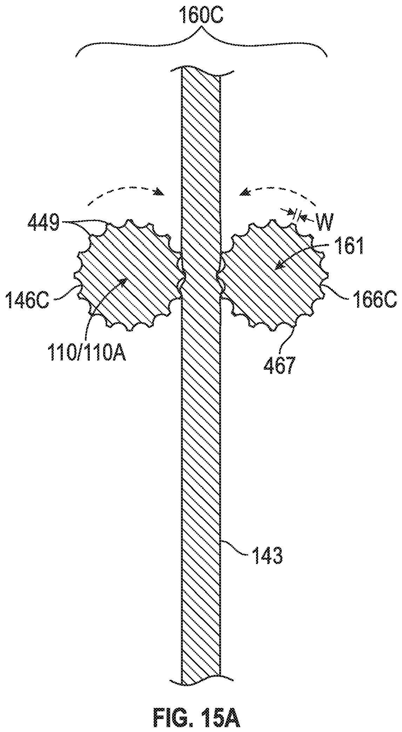

Referring to FIG. 15A-C, a counter-rotating drive is illustrated that can be utilized as a dual drive or with the drives 100, 100A ( a quad drive) or the drive 300 (a hex drive), where components with different components relative to the drives 100, 100A and 300 will be given the same reference character with the designation (C). The drive 160C has shafts HOC and 161C with teeth 146C and 166C with substantially flat engaging surfaces 449 and 467. The number of teeth 146C, 166C and the dimensions of the land widths 449, 467 can be varied depending on the particular material used for the filament and the particular printer.

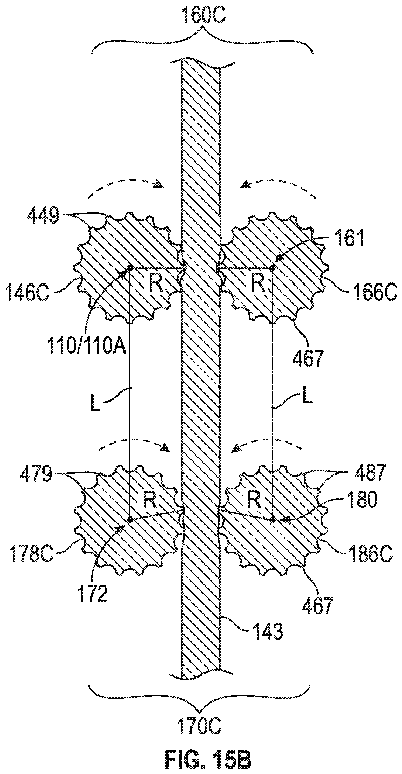

Referring to FIG. 15B, a quad drive is illustrated at 160C and 170C. The drive 160C is the same as mention with respect to FIG. 15A. However, the shaft 110 can be driven or the shaft 110A can be a follower. The drive 170C includes the counter-rotating shafts 178 and 180 having teeth 178C and 186C with land widths 479 and 487, respectively. Again, the number of teeth 178C, 186C and the dimensions of the land widths 479, 487 can be varied depending on the particular material used for the filament and the particular printer, but have substantially the same number of teeth and dimensions of the flat surface as that of the shafts 110/110A and 161. In FIG. 15B, the teeth of the first drive 160C are in phase with one another, the teeth of the second drive 170B are in phase with one another, and the teeth of the first drive 160C are out of phase with the teeth of the second drive 170C.

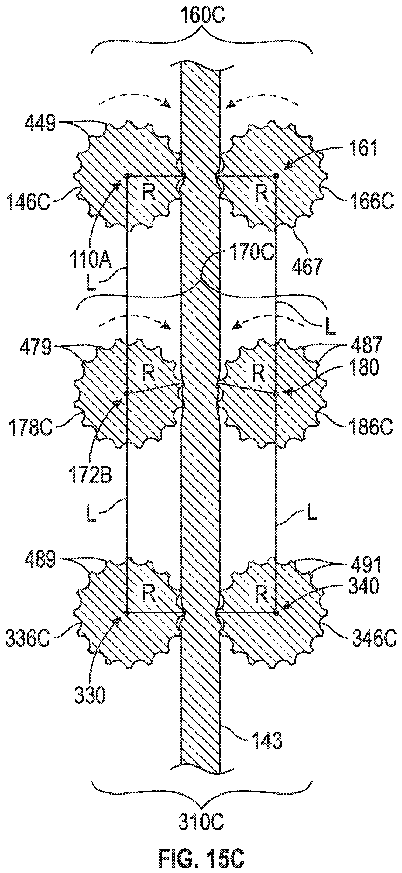

Refer to FIG. 15C, a quad drive is illustrated at 160C, 170C and 3 IOC. The drives 160C and 170 are substantially similar to that described in FIG. 15B. The difference is that the shaft 110A is not driven and the shaft 172B is driven. The drive 3 IOC includes counter-rotating shafts 330, 340 with teeth 336C and 346C with substantially flat surfaces 489 and 491. Again, the number of teeth 336C, 346C and the dimensions of the land widths 489, 491 can be varied depending on the particular material used for the filament and the particular printer, but have substantially the same number of teeth and dimensions of the flat surface as that of the shafts 110, 161 and 172A, 180. In FIG. 15C, the teeth of the first drive 160C and the third drive 310C are in phase with one another, the teeth of the second drive 170B are in phase with one another, and the teeth of the first drive 160C and the third drive 310C are out of phase with the teeth of the second drive 170C.

The radius R, length L between centerpoints of successive shaft and number of teeth per shaft are taken into consideration such that such that drives engage the same cutouts or notches created by the upper drive 160C in a quad drive and the upper and middle drives 160C and 170C in a hex drive. The alignment of the drives prevents excessive debris build up and increases the reliability of the print head.

By way of non-limiting example, the filament engaging portions can include sixteen teeth having a depth of about 0.508 mm (0.020 inches). According to the present disclosure, teeth have a land width W ranging from about 2,032 mm (0.08 inches) to about 3.81 mm (0.15 inches). More particularly, the land widths 449, 467 have land widths W that range from about 2,032 mm (0.08 inches) to about 3,048 mm (0.12 inches) and even more particularly from about 2,286 mm (0.09 inches) to about 2,794 mm (0.11 inches). The land widths 449, 467 can be flat or substantially flat.

The teeth 16C, 166C with the land widths 449, 467 can be utilized with a lower durometer filament material such as those having less than about 95 on the Shore A scale, and greater than about 60 Shore A whether as a dual drive 160C, a quad drive 160C and 170C and/or a hex drive 160C, 170C and 310C. In particular, the durometer of the filament material may be between about 75 and about 95 on the Shore A scale, or between about 85 and about 95 on the Shore A scale. As illustrated, the land widths 449, 467 of the teeth 446, 466 are in phase, but can be out of phase.

When the land widths 449, 467 of the in phase teeth, a low durometer filament 143 is grabbed by the aligned, flat engagement teeth remains in the filament path with reduced or flexing and bending. The flat profile of the engagement teeth 444, 166 avoids or minimizes puncturing of the surface of a low durometer filament 443 and if punctured utilizes the same punctures as the filament is driven through successive drives, as it has been found that unwanted material builds up in the drives and causes clogging and jamming, when the soft material is punctured.

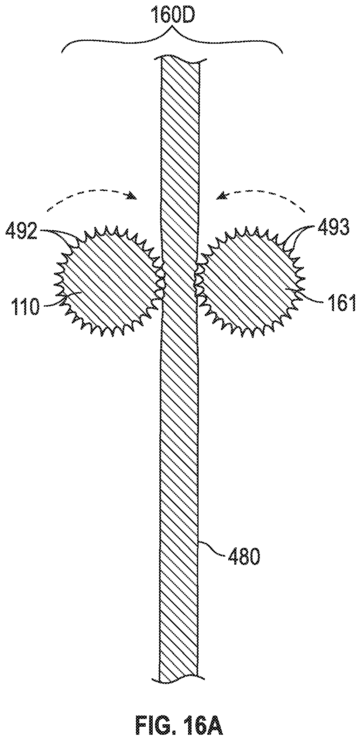

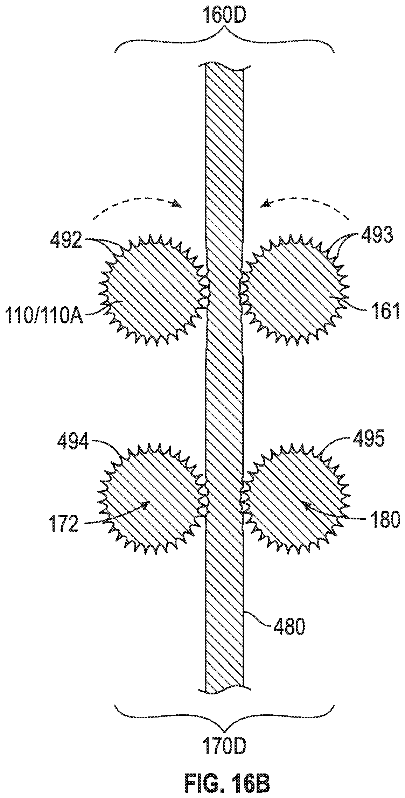

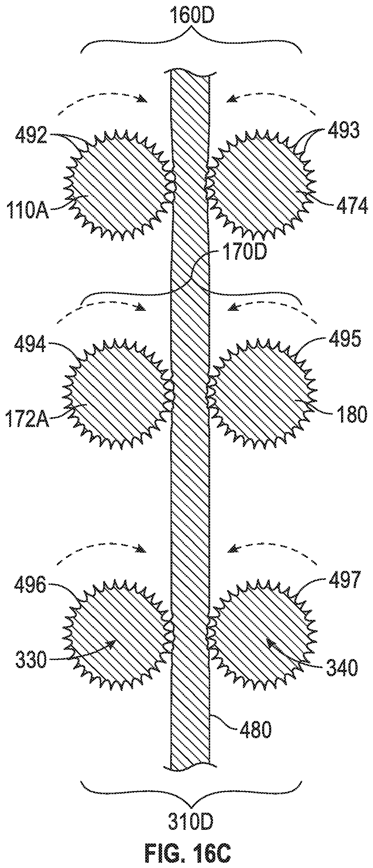

Referring to FIG. 16A-C, a counter rotating filament drive is illustrated that can be used as a dual drive as illustrated in FIG. 16A, with the drive 100, 100A (a quad drive) as illustrated in FIG. 16B or the drive 300 (a hex drive) as illustrated in FIG. 16C to effectively and accurately draw harder filaments 480, such as bound particle filaments as previously described where components with different components relative to the drives 100, 100A and 300 will be given the same reference character with the designation (D). The harder filaments 480 can be difficult to grip with a standard counter-rotating drive due to slippage because the teeth cannot penetrate the filament. The disclosed filament drive illustrated in FIG. 16A-C has counter rotating drives with closely spaced apart teeth, such that a greater number of teeth engage the filament in each drive.

As illustrated, the drive includes 32 uniformly spaced apart teeth. However, the disclosed number of teeth is not limiting. A non-limiting range of the sharp edge of the teeth ranges from about 0,0254 mm (0.001 inches) to about 0,0762 mm (0.003 inches) where the teeth can be in phase or out of phase.

As illustrated in FIG. 16A, a dual drive 160C is illustrated that include the drive 110 and the follower shaft 161. Each shaft 110 and 161 includes a plurality of spaced apart teeth 492 and 493, respectively. The close proximity of adjacent teeth 492 and 493 increases the number of contact points with the filament 480 as the filament is driven through the drive 160A. The number of contact point and the sharp edges of the teeth increase the grip on the filament 480 which is beneficial when driving the hard filament.

FIG. 16B illustrates a quad drive with the drives 160D and 170D. The quad drive 160D was described with respect to FIG. 16A. However, the shaft can either be a drive shaft 110 or be driven 110A as described above. The drive 17D includes counter rotating shafts 172 and 180 with a plurality of teeth 494 and 495 that are similarly configured to that of the teeth 492 and 493.

FIG. 16C illustrates a hex drive with drives 160D, 170D and 310D. The drive 170D includes drive shaft 172A and the drive 160D includes driven shaft 110A. Drive 310D includes counterrotating shafts 330 and 340 having spaced apart, substantially uniform teeth 496 and 497 that have substantially the same configuration as that of teeth 492-495. Utilizing an increased number of drives, increases the contact points with the hard filament, which in turn increases the reliability of the feed rate of the filament into the liquefier.

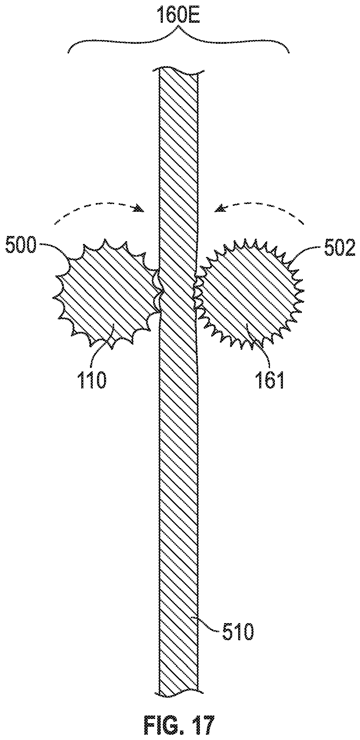

FIG. 17 illustrates a dual drive 160E having drive shaft 110 and driven shaft 161 with different numbers of teeth 500 and 502, respectively. As illustrated, the driven shaft 161 has double the number of teeth than the drive shaft 110 or a ratio of 2: 1. This embodiment has been shown to mitigate bead width variation caused by the driven shaft 161 having less stability than the drive shaft 110 (which is directly powered by the motor), by reducing the cyclical manner in which the driven shaft 161 engages the filament 143. Reducing the bead width variability, results in a part being more accurately printed. While double the number of teeth 502 is illustrated on the driven shaft 502, and lesser number of teeth 500 (course teeth) is positioned on the drive shaft 110, other variations other than 2: 1 may also be used including a ratio in the range of about 1.5: 1 and about 3.0: 1 and even more particularly a ratio in the range of about 1.8: 1 and about 2.2: 1.

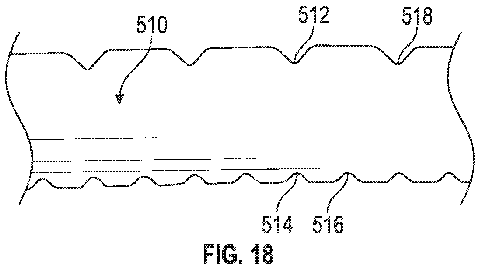

Referring to FIG. 18, when utilizing a drive with a 2:1 ration of teeth, indentions in the filament from the follower drive alternate from being in phase to out of phase with respect to the drive 160D. It has been found that alternating the driven shaft 161 relative to the drive shaft 110 decreases bead width variation. Indentions in the filament 510 illustrate alternating engagements between in phase 512 and 514 and out of phase 512, 516 and 518.While illustrated as a dual drive 160E, a plurality of drives in series, such as a quad drive and a hex drive, can be added to the drive as discussed above.

Although the present disclosure has been described with reference to preferred embodiments, workers skilled in the art will recognize that changes may be made in form and detail relative to particularly disclosed embodiments without departing from the scope of the disclosure, as defined in the appended claims.

## Claims

1. A filament drive mechanism for use in driving an elastomeric filament in an additive manufacturing system, the filament drive mechanism comprising:
a first drive comprising:
a first rotatable shaft;
a second rotatable shaft engaged with the first rotatable shaft in a counter rotational configuration; and
a plurality of teeth on each rotatable shaft, and positioned on opposing sides of a filament path with a gap therebetween so as to engage a filament provided in the filament path wherein the plurality of teeth has a land width ranging from about 2.032 mm (0.08 inches) to about 3.81 mm (0.15 inches).

2. The filament drive mechanism of claim 1, wherein the plurality of teeth on each shaft are in phase.

3. The filament drive mechanism of claim 1, and further comprising:
a second drive spaced from the first drive, the second drive comprising:
a third rotatable shaft;
a fourth rotatable shaft engaged with the third rotatable shaft in a counter rotational configuration;
a plurality of teeth on each rotatable shaft of the second drive, and positioned on opposing sides of a filament path with a gap therebetween so as to engage a filament provided in the filament path wherein the plurality of teeth has a land width ranging from about 2.032 mm (0.08) inches to about 3.81 mm (0.15 inches); and
a first bridge shaft configured to rotatably couple the first drive and the second drive.

4. The filament drive mechanism of claim 3, wherein the second filament drive is spaced from the first filament drive a first selected distance which causes the plurality of teeth in the second drive to engage the filament in substantially a same plurality of locations thereon as the plurality of teeth in the first drive.

5. The filament drive mechanism of claim 3, and further comprising:
a third drive spaced from the second drive, the third drive comprising:
a fifth rotatable shaft;
a sixth rotatable shaft engaged with the first rotatable shaft in a counter rotational configuration;
a plurality of teeth on each rotatable shaft of the third drive, and positioned on opposing sides of a filament path with a gap therebetween so as to engage a filament provided in the filament path wherein the plurality of teeth has a land width ranging from about 2.032 mm (0.08 inches) to about 3.81 mm (0.15 inches); and
a second bridge shaft configured to rotatably couple the second drive and the third drive such that the first, second and third drive rotate at substantially a same rate.

6. The filament drive mechanism of claim 3, wherein the teeth of the first drive are in phase with one another, the teeth of the second drive are in phase with one another, and the teeth of the first drive are out of phase with the teeth of the second drive.

7. The filament drive mechanism of claim 3, wherein one of the rotatable shafts is a drive shaft configured to be driven by a motor at a rotational rate selected to advance the filament at a desired feed rate and to cause the other rotatable shafts to rotate at the same rotational rate, such that the teeth of each drive engage a filament in the filament path and will coordinate to advance the filament while counter-rotating at the same rotational rate to drive the filament into a liquefier.

8. The filament drive mechanism of claim 7, wherein the land width is a substantially flat surface.

9. The filament drive mechanism of claim 3, wherein the bridge shaft has gear cogs that engage gear cogs on the first and second drives such that the first and second drives engage the filament at a substantially similar rate.

10. The filament drive mechanism of claim 3, and further comprising a drive block, wherein the drive block comprises:
a channel comprising the filament path; and
a plurality of pairs of spaced apart cavities on opposing sides of the filament path, each cavity intersecting the filament path such that portions of the teeth of the rotatable shafts of first and second filament drives are configured to enter the filament path and rotatably engage the filament.

11. A method for printing a three-dimensional part with an additive manufacturing system, the method comprising:
providing a consumable material in filament form;
guiding the filament to a print head having a filament drive and liquefier;
engaging the filament with a filament drive of a quad drive type which has a pair of counterrotating shafts, each shaft having an engagement surface comprising a plurality of filament engagement teeth configured to engage a filament, and where each shaft is configured to be directly or indirectly driven by a single power source and to have the same rate of rotation, wherein one of the shafts is a drive shaft configured to be driven by a motor at a rotational rate selected to advance the filament at a desired feed rate and to cause the other shafts to rotate at the same rotational rate, such that each pair of filament engagement elements will engage a filament in the filament path and will coordinate to advance the filament while counter-rotating at the same rotational rate to drive the filament into a liquefier;
engaging the filament comprising engaging the filament with a plurality of teeth on each of a first and second engagement surfaces of first and second drives of the quad drive the plurality of teeth having a land width ranging from about 2.032 mm (0.08 inches) to about 3,81 mm (0.15 inches);
melting the filament in the liquefier to provide a molten part material; and
extruding the molten part material from the liquefier to print the three-dimensional part.

12. The method of claim 11, wherein the filament comprises an elastomer having a Shore Hardness A that is less than 95.

13. The method of claim 11, wherein the plurality of teeth comprises a first plurality of teeth and a second plurality of teeth wherein the number of teeth in the first plurality and the second plurality have a ratio ranging from about 1.5:1 to about 3.0:1.

14. The method of claim 11, wherein engaging the filament with the at least first and second drives comprises engaging the filament with a first drive, a second drive and a third drive wherein the second drive is between the first drive and the third drive.

15. The method of claim 11, wherein engaging the filament comprises engaging the filament with a quad drive and a third drive to form a filament drive of a hex drive type which has a third pair of counterrotating shafts.

## Patentansprüche

1. Fadenantriebsmechanismus zur Verwendung beim Antreiben eines Elastomer-Fadens bei einem Additive-Herstellung-System, wobei der Fadenantriebsmechanismus aufweist:
einen ersten Antrieb, der aufweist:
eine erste drehbare Welle,
eine zweite drehbare Welle, die mit der ersten drehbaren Welle in einer Gegenrotationskonfiguration im Eingriff ist, und
eine Mehrzahl von Zähnen an jeder drehbaren Welle, die auf gegenüberliegenden Seiten eines Fadenwegs mit einem Spalt dazwischen positioniert sind, um mit einem Faden im Eingriff zu sein, der in dem Fadenweg bereitgestellt ist, wobei die Mehrzahl von Zähnen eine Kopfflächenbreite hat, die im Bereich von etwa 2,032 mm (0,08 Inch) bis etwa 3,81 mm (0,15 Inch) liegt.

2. Fadenantriebsmechanismus gemäß Anspruch 1, wobei die Mehrzahl von Zähnen an jeder Welle in Phase sind.

3. Fadenantriebsmechanismus gemäß Anspruch 1, ferner aufweisend:
einen zweiten Antrieb, der von dem ersten Antrieb im Abstand ist, wobei der zweite Antrieb aufweist:
eine dritte drehbare Welle,
eine vierte drehbare Welle, die mit der dritten drehbaren Welle in einer Gegenrotationskonfiguration im Eingriff ist,
eine Mehrzahl von Zähnen an jeder drehbaren Welle des zweiten Antriebs, die auf gegenüberliegenden Seiten eines Fadenwegs mit einem Spalt dazwischen bereitgestellt sind, um mit einem Faden im Eingriff zu sein, der in dem Fadenweg bereitgestellt ist, wobei die Mehrzahl von Zähnen eine Kopfflächenbreite hat, die im Bereich von etwa 2,032 mm (0,08) Inch bis etwa 3,81 mm (0,15 Inch) liegt, und
eine erste Brückenwelle, die konfiguriert ist, um den ersten Antrieb und den zweiten Antrieb drehzuverbinden.

4. Fadenantriebsmechanismus gemäß Anspruch 3, wobei der zweite Fadenantrieb von dem ersten Fadenantrieb um eine erste ausgewählte Distanz im Abstand ist, was bewirkt, dass die Mehrzahl von Zähnen beim zweiten Antrieb mit dem Faden im Eingriff ist an im Wesentlichen einer gleichen Mehrzahl von Stellen daran wie die Mehrzahl von Zähnen beim ersten Antrieb.

5. Fadenantriebsmechanismus gemäß Anspruch 3, ferner aufweisend:
einen dritten Antrieb, der von dem zweiten Antrieb im Abstand ist, wobei der dritte Antrieb aufweist:
eine fünfte drehbare Welle,
eine sechste drehbare Welle, die mit der ersten drehbaren Welle in einer Gegenrotationskonfiguration im Eingriff ist,
eine Mehrzahl von Zähnen an jeder drehbaren Welle des dritten Antriebs, die auf gegenüberliegenden Seiten eines Fadenwegs mit einem Spalt dazwischen angeordnet sind, um mit einem Faden im Eingriff zu sein, der in dem Fadenweg bereitgestellt ist, wobei die Mehrzahl von Zähnen eine Kopfflächenbreite hat, die in einem Bereich von etwa 2,032 (0,08 Inch) bis etwa 3,81 (0,15 Inch) liegt, und
eine zweite Brückenwelle, die konfiguriert ist, um den zweiten Antrieb und den dritten Antrieb drehzuverbinden, sodass der erste, der zweite und der dritte Antrieb mit im Wesentlichen der gleichen Geschwindigkeit rotieren.

6. Fadenantriebsmechanismus gemäß Anspruch 3, wobei die Zähne des ersten Antriebs in Phase miteinander sind, die Zähne des zweiten Antriebs in Phase miteinander sind und die Zähne des ersten Antriebs außer Phase mit den Zähnen des zweiten Antriebs sind.

7. Fadenantriebsmechanismus gemäß Anspruch 3, wobei eine von den drehbaren Wellen eine Antriebswelle ist, die konfiguriert ist, um von einem Motor angetrieben zu werden mit einer Drehgeschwindigkeit, die ausgewählt ist, um den Faden mit einer gewünschten Zuführgeschwindigkeit vorzurücken, und um zu bewirken, dass die anderen drehbaren Wellen mit der geleichen Drehgeschwindigkeit drehen, sodass die Zähne jedes Antriebs mit einem Faden im Fadenweg im Eingriff stehen und zusammenwirken, um den Faden vorzurücken, während Gegenrotierens mit der gleichen Drehgeschwindigkeit, um den Faden in einen Verflüssiger hinein anzutreiben.

8. Fadenantriebsmechanismus gemäß Anspruch 7, wobei die Kopfflächenbreite eine im Wesentlichen flache Fläche ist.

9. Fadenantriebsmechanismus gemäß Anspruch 3, wobei die Brückenwelle Zahnradzähne hat, die mit den Zahnradzähnen am ersten und zweiten Antrieb im Eingriff sind, sodass der erste und der zweite Antrieb mit einer im Wesentlichen gleichen Geschwindigkeit mit dem Faden im Eingriff stehen.

10. Fadenantriebsmechanismus gemäß Anspruch 3, ferner aufweisend einen Antriebsblock, wobei der Antriebsblock aufweist:
einen Kanal, der den Fadenweg aufweist, und
eine Mehrzahl von Paaren von im Abstand angeordneten Ausnehmungen auf gegenüberliegenden Seiten des Fadenwegs, wobei jede Ausnehmung den Fadenweg kreuzt, sodass Abschnitte der Zähne der drehbaren Wellen des ersten und zweiten Fadenantriebs konfiguriert sind, um in den Fadenweg einzutreten und drehend mit dem Faden im Eingriff zu sein.

11. Verfahren zum Drucken eines dreidimensionalen Bauteils mittels eines Additive-Herstellung-Systems, wobei das Verfahren aufweist:
Bereitstellen eines Verbrauchmaterials in Fadenform,
Führen des Fadens zu einem Druckkopf, der einen Fadenantrieb und einen Verflüssiger hat,
in-Eingriff-Bringen des Fadens mit einem Fadenantrieb eines Vierer-Antrieb-Typs, der ein Paar gegenrotierende Welle hat, wobei jede Welle eine Eingriffsfläche hat, die eine Mehrzahl von Fadeneingriffszähnen aufweist, die konfiguriert sind, um mit einem Faden im Eingriff zu sein, und wobei jede Welle konfiguriert ist, um direkt oder indirekt von einer einzigen Leistungsquelle angetrieben zu werden und um die gleiche Drehgeschwindigkeit zu haben, wobei eine der Wellen eine Antriebswelle ist, die konfiguriert ist, um von einem Motor angetrieben zu werden mit einer Drehgeschwindigkeit, die ausgewählt ist, um den Faden mit einer gewünschten Zuführgeschwindigkeit vorzurücken, und um zu bewirken, dass die anderen Wellen mit der gleichen Drehgeschwindigkeit rotieren, sodass jedes Paar von Fadeneingriffselementen mit einem Faden im Fadenweg im Eingriff kommt und zusammenwirkt, um den Faden vorzurücken, während Gegenrotierens mit der gleichen Drehgeschwindigkeit, um den Faden in einen Verflüssiger hinein anzutreiben,
in-Eingriff-Bringen des Fadens, aufweisend in-Eingriff-Bringen des Fadens mit einer Mehrzahl von Zähnen an jeder von einer ersten und einer zweiten Eingriffsfläche eines ersten und eines zweiten Antriebs des Vierer-Antriebs, wobei die Mehrzahl von Zähnen eine Kopfflächenbreite hat, die in einem Bereich von etwa 2,032 mm (0,08 Inch) bis etwa 3,81 mm (0,15 Inch) liegt,
Schmelzen des Fadens im Verflüssiger, um ein geschmolzenes Bauteilmaterial bereitzustellen, und
Extrudieren des geschmolzenen Bauteilmaterials von dem Verflüssiger aus, um das dreidimensionale Bauteil zu drucken.

12. Verfahren gemäß Anspruch 11, wobei der Faden ein Elastomer aufweist, das eine Shore-Härte A kleiner als 95 hat.

13. Verfahren gemäß Anspruch 11, wobei die Mehrzahl von Zähnen eine erste Mehrzahl von Zähnen und eine zweite Mehrzahl von Zähnen aufweist, wobei die Anzahl von Zähnen bei der ersten Mehrzahl und der zweiten Mehrzahl ein Verhältnis im Bereich von etwa 1,5:1 bis etwa 3,0:1 haben.

14. Verfahren gemäß Anspruch 11, wobei das in-Eingriff-Bringen des Fadens mit dem wenigstens ersten und zweiten Antrieb aufweist in-Eingriff-Bringen des Fadens mit einem ersten Antrieb, einem zweiten Antrieb und einem dritten Antrieb, wobei der zweite Antrieb zwischen dem ersten und dem dritten Antrieb vorliegt.

15. Verfahren gemäß Anspruch 11, wobei das in-Eingriff-Bringen des Fadens aufweist in-Eingriff-Bringen des Fadens mit einem Vierer-Antrieb und einem dritten Antrieb, um einen Fadenantrieb eines Sechser-Antrieb-Typs zu bilden, der ein drittes Paar gegenrotierender Wellen hat.

## Revendications

1. Mécanisme d'entraînement de filament pour l'utilisation dans l'entraînement d'un filament en élastomère dans un système de fabrication additive, le mécanisme d'entraînement de filament comprenant :
un premier entraînement comprenant :
un premier arbre rotatif ;
un deuxième arbre rotatif engagé avec le premier arbre rotatif dans une configuration de contre-rotation ; et
une pluralité de dents sur chaque arbre rotatif, et positionnées sur des côtés opposés d'un trajet de filament avec une fente entre ceux-ci de sorte à engager un filament prévu dans le trajet de filament, dans lequel la pluralité de dents présente une largeur de face variant d'environ 2,032 mm (0,08 pouce) à environ 3,81 mm (0,15 pouce).

2. Mécanisme d'entraînement de filament selon la revendication 1, dans lequel la pluralité de dents sur chaque arbre sont en phase.

3. Mécanisme d'entraînement de filament selon la revendication 1, et comprenant en outre :
un deuxième entraînement espacé du premier entraînement, le deuxième entraînement comprenant :
un troisième arbre rotatif ;
un quatrième arbre rotatif engagé avec le troisième arbre rotatif dans une configuration de contre-rotation ;
une pluralité de dents sur chaque arbre rotatif du deuxième entraînement, et positionnées sur des côtés opposés d'un trajet de filament avec une fente entre ceux-ci de sorte à engager un filament prévu dans le trajet de filament, dans lequel la pluralité de dents présente une largeur de face variant d'environ 2,032 mm (0,08 pouce) à environ 3,81 mm (0,15 pouce) ; et
un premier arbre de pont configuré pour coupler de manière rotative le premier entraînement et le deuxième entraînement.

4. Mécanisme d'entraînement de filament selon la revendication 3, dans lequel le deuxième entraînement de filament est espacé du premier entraînement de filament d'une première distance sélectionnée qui amène la pluralité de dents dans le deuxième entraînement à engager le filament dans sensiblement une même pluralité d'emplacement sur celui-ci que la pluralité de dents dans le premier entraînement.

5. Mécanisme d'entraînement de filament selon la revendication 3, et comprenant en outre :
un troisième entraînement espacé du deuxième entraînement, le troisième entraînement comprenant :
un cinquième arbre rotatif ;
un sixième arbre rotatif engagé avec le premier arbre rotatif dans une configuration de contre-rotation ;
une pluralité de dents sur chaque arbre rotatif du troisième entraînement, et positionnées sur des côtés opposés d'un trajet de filament avec une fente entre ceux-ci de sorte à engager un filament prévu dans le trajet de filament, dans lequel la pluralité de dents présente une largeur de face variant d'environ 2,032 mm (0,08 pouce) à environ 3,81 mm (0,15 pouce) ; et
un second arbre de pont configuré pour coupler de manière rotative le deuxième entraînement et le troisième entraînement de sorte que les premier, deuxième et troisième entraînements tournent à sensiblement une même vitesse.

6. Mécanisme d'entraînement de filament selon la revendication 3, dans lequel les dents du premier entraînement sont en phase les unes avec les autres, les dents du deuxième entraînement sont en phase les unes avec les autres, et les dents du premier entraînement sont hors phase avec les dents du deuxième entraînement.

7. Mécanisme d'entraînement de filament selon la revendication 3, dans lequel un des arbres rotatifs est un arbre d'entraînement configuré pour être entraîné par un moteur à une vitesse rotative sélectionnée pour faire avancer le filament à une vitesse d'alimentation souhaitée et pour amener les autres arbres rotatifs à tourner à la même vitesse rotative de sorte que les dents de chaque entraînement engagent un filament dans le trajet de filament et se coordonneront pour faire avancer le filament tout en contre-tournant à la même vitesse rotative pour entraîner le filament dans un liquéfacteur.

8. Mécanisme d'entraînement de filament selon la revendication 7, dans lequel la largeur de face est une surface sensiblement plate.

9. Mécanisme d'entraînement de filament selon la revendication 3, dans lequel l'arbre de pont présente des dents d'engrenage qui engagent des dents d'engrenage sur les premier et deuxième entraînements de sorte que les premier et deuxième entraînements engagent le filament à une vitesse sensiblement similaire.

10. Mécanisme d'entraînement de filament selon la revendication 3, et comprenant en outre un bloc d'entraînement, dans lequel le bloc d'entraînement comprend :
un canal comprenant le trajet de filament ; et
une pluralité de paires de cavités espacées sur des côtés opposés du trajet de filament, chaque cavité croisant le trajet de filament de sorte que des parties des dents des arbres rotatifs des premier et deuxième entraînements de filament soient configurées pour entrer dans le trajet de filament et engager de manière rotative le filament.

11. Procédé d'impression d'une partie en trois dimensions avec un système de fabrication additive, le procédé comprenant :
la fourniture d'un matériau consommable sous la forme d'un filament ;
le guidage du filament jusqu'à une tête d'impression présentant un entraînement de filament et un liquéfacteur ;
l'engagement du filament avec un entraînement de filament d'un type d'entraînement quadruple qui présente une paire d'arbres de contre-rotation, chaque arbre présentant une surface d'engagement comprenant une pluralité de dents d'engagement de filament configurées pour engager un filament, et où chaque arbre est configuré pour être directement ou indirectement entraîné par une seule source d'alimentation et pour présenter la même vitesse de rotation, dans lequel un des arbres est un arbre d'entraînement configuré pour être entraîné par un moteur à une vitesse de rotation sélectionnée pour faire avancer le filament à une vitesse d'alimentation souhaitée et pour amener les autres arbres à tourner à la même vitesse de rotation de sorte que chaque paire d'éléments d'engagement de filament engagera un filament dans le trajet de filament et se coordonnera pour faire avancer le filament tout en contre-tournant à la même vitesse de rotation pour entraîner le filament dans un liquéfacteur ;
l'engagement du filament comprenant l'engagement du filament avec une pluralité de dents sur chacune d'une première et seconde surfaces d'engagement de premier et deuxième entraînements de l'entraînement quadruple, la pluralité de dents présentant une largeur de face variant d'environ 2,032 mm (0,08 pouce) à environ 3,81 mm (0,15 pouce) ;
la fusion du filament dans le liquéfacteur pour fournir un matériau de pièce fondu ; et
l'extrusion du matériau de pièce fondu du liquéfacteur pour imprimer la pièce en trois dimensions.

12. Procédé selon la revendication 11, dans lequel le filament comprend un élastomère présentant une dureté Shore A qui est inférieure à 95.

13. Procédé selon la revendication 11, dans lequel la pluralité de dents comprend une première pluralité de dents et une seconde pluralité de dents, dans lequel le nombre de dents dans la première pluralité et la seconde pluralité présentent un rapport variant d'environ 1,5:1 à environ 3,0:1.

14. Procédé selon la revendication 11, dans lequel l'engagement du filament avec l'au moins premier et deuxième entraînement comprend l'engagement du filament avec un premier entraînement, un deuxième entraînement et un troisième entraînement, dans lequel le deuxième entraînement est entre le premier entraînement et le troisième entraînement.

15. Procédé selon la revendication 11, dans lequel l'engagement du filament comprend l'engagement du filament avec un entraînement quadruple et un troisième entraînement pour former un entraînement de filament d'un type d'entraînement hexagonal qui présente une troisième paire d'arbres de contre-rotation.
